# EUROPEAN PATENT APPLICATION

(11) **EP 3 641 261 A1**
(43) Date of publication of application: **22.04.2020**
(21) Application number: 18817697.8
(22) Date of filing: 21.05.2018
(51) Int. Cl.: H04L 29/06

(54) **ENTRUSTED LOGIN METHOD, RELATED DEVICE AND COMPUTER READABLE STORAGE MEDIUM**

(30) Priority: 16.06.2017 CN 201710461552
(71) Applicant: ZTE Corporation, Shenzhen, Guangdong 518057 (CN)
(72) Inventor: WANG, Limin, Shenzhen Guangdong 51805 (CN); ZENG, Wei, Shenzhen Guangdong 518057 (CN); LI, Gang, Shenzhen Guangdong 518057 (CN)
(74) Representative: Aipex B.V.
(86) International application number: PCT/CN2018/087649
(87) International publication number: WO 2018/228138

(57) **Abstract**

The present invention relates to the technical field of communications, and provides an entrusted login method, a related device and a computer readable storage medium. The method comprises: receiving entrusted login application information transmitted by a first client, and generating a temporary password according to a first account (S201); transmitting entrusted login authorization information to a second client that logs in a second account, the entrusted login authorization information comprising the first account, the second account, and the temporary password (S202); receiving a login request transmitted by the second client and comprising the first account and the temporary password (S203); and authenticating the temporary password, and if the authentication is successful, transmitting a response message indicating entrusted login success to the second client (S204).

## Description

### TECHNICAL FIELD

The present invention relates to the field of communications and, in particular, to an entrusted-login method, related equipment and a computer-readable storage medium.

### BACKGROUND

With the development of communication technology, in a modern communication system, users and accounts are in one-to-one correspondence, each user can log in to only one client using their own account and password and cannot log in to two or more clients simultaneously using one account for the purpose of avoiding login conflicts. However, in the actual use process of a user, a third party user is often required to be entrusted to log in to the user's own account and perform certain operations. Therefore, the third party user is required to be informed of the account and the password of the user so that the third party user logs in to the account at his client. Because the third-party user is informed of the account and the password of the user, the risk of leakage of personal sensitive information is increased, and therefore the current mode of entrusting other people to log in is low in safety.

### SUMMARY

The following is a summary of the subject matter described herein in detail. This summary is not intended to limit the scope of the claims.

Embodiments of the present invention provide an entrusted-login method, related equipment and a computer-readable storage medium.

Embodiments of the present invention provide an entrusted-login method. The method includes the steps described below.

Entrusted-login application information sent by a first client is received, and a temporary password is generated according to a first account, where the entrusted-login application information includes the first account and a second account.

Entrusted-login authorization information is sent to a second client in which the second account is logged in, where the entrusted-login authorization information includes the first account, the second account and the temporary password.

A login request sent by the second client is received, where the login request includes the first account and the temporary password.

The temporary password is authenticated, and if the authentication is successful, a response message indicating entrusted-login success is sent to the second client.

Embodiments of the present invention further provide an entrusted-login method. The method includes the steps described below.

Entrusted-login authorization information sent by a server is received, where the entrusted-login authorization information includes a first account and a temporary password.

A login request is sent to the server, where the login request includes the first account and the temporary password.

A response message indicating entrusted-login success sent by the server is received.

Embodiments of the present invention further provide an entrusted-login apparatus. The apparatus includes a generation module, a first sending module, a first receiving module and a second sending module.

The generation module is configured to receive entrusted-login application information sent by a first client, and generate a temporary password according to a first account, where the entrusted-login application information includes the first account and a second account.

The first sending module is configured to send entrusted-login authorization information to a second client in which the second account is logged in, where the entrusted-login authorization information includes the first account, the second account and the temporary password.

The first receiving module is configured to receive a login request sent by the second client, where the login request includes the first account and the temporary password.

The second sending module is configured to authenticate the temporary password, and if the authentication is successful, send a response message indicating entrusted-login success to the second client.

Embodiments of the present invention further provide an entrusted-login apparatus. The apparatus includes a first receiving module, a first sending module and a second receiving module.

The first receiving module is configured to receive entrusted-login authorization information sent by a server, where the entrusted-login authorization information includes a first account and a temporary password.

The first sending module is configured to send a login request to the server, where the login request includes the first account and the temporary password.

The second receiving module is configured to receive a response message indicating entrusted-login success sent by the server.

The present embodiment further provides a server, including a memory, a processor, and a computer program stored in the memory and executable on the processor, where when executing the computer program, the processor performs the entrusted-login method applied in the server.

The present embodiment further provides a user terminal, including a memory, a processor, and a computer program stored in the memory and executable on the processor, where when executing the computer program, the processor implements the entrusted-login method applied in the second client.

Embodiments of the present invention further provide a computer-readable storage medium, which stores a computer program, when executed by a processor, performs the steps of the entrusted-login method applied in the server.

Embodiments of the present invention further provide a computer-readable storage medium, which stores a computer program, when executed by a processor, performs the steps of the entrusted-login method applied in a second client.

Other aspects can be understood after the drawings and the detailed description are read and understood.

### BRIEF DESCRIPTION OF DRAWINGS

FIG. 1 is a structural diagram of a network architecture according to embodiments of the present invention;
FIG. 2 is a flowchart of an entrusted-login method according to embodiments of the present invention;
FIG. 3 is a flowchart of another entrusted-login method according to embodiments of the present invention;
FIG. 4 is a flowchart of another entrusted-login method according to embodiments of the present invention;
FIG. 5 is a flowchart of another entrusted-login method according to embodiments of the present invention;
FIG. 6 is a flowchart of another entrusted-login method according to embodiments of the present invention;
FIG. 7 is a structural diagram of an entrusted-login apparatus according to embodiments of the present invention;
FIG. 8 is a structural diagram of another entrusted-login apparatus according to embodiments of the present invention;
FIG. 9 is a structural diagram of another entrusted-login apparatus according to embodiments of the present invention;
FIG. 10 is a structural diagram of another entrusted-login apparatus according to embodiments of the present invention;
FIG. 11 is a structural diagram of another entrusted-login apparatus according to embodiments of the present invention;
FIG. 12 is a structural diagram of another entrusted-login apparatus according to embodiments of the present invention;
FIG. 13 is a structural diagram of another entrusted-login apparatus according to embodiments of the present invention;
FIG. 14 is a structural diagram of another entrusted-login apparatus according to embodiments of the present invention;
FIG. 15 is a structural diagram of a server according to embodiments of the present invention; and
FIG. 16 is a structural diagram of a user terminal according to embodiments of the present invention.

### DETAILED DESCRIPTION

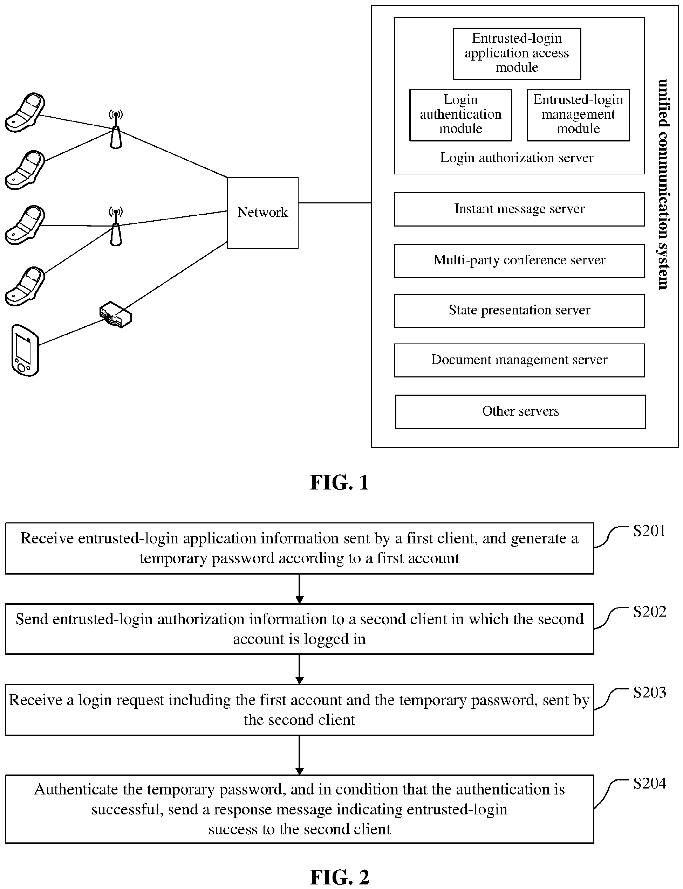

As shown in FIG. 1, which is a structural diagram of a network architecture according to embodiments of the present invention, an entrusted-login method provided by embodiments of the present invention may be applied to a unified communication suite system, and a plurality of application terminals may be installed with a rich communication suite (RCS) client, where some application terminals are connected to a network through message interaction with a base station; some application terminals are connected to the network through routers; the application terminal is accessed to the unified communication suite system through a network, and the unified communication suite system mainly includes a login authentication server, an instant message server, a multi-party conference server, a state presentation server and a document management server. The application terminals can perform information interaction with the server through different protocols according to different tasks to be completed. For example, the application terminals can interact with a server system through a session initiation protocol (SIP) when a session needs to be completed; when a message needs to be sent, the message session relay protocol (MSRP) can interact with the server system.

In embodiments of the present invention, the login authentication server may include a login authentication module, an entrusted-login application access module, and an entrusted-login management module.

The entrusted-login application access module may be configured to receive an entrusted-login application message initiated by the application terminal through the RCS client, where the entrusted-login application message includes information such as first account information, second account information, authorized operation authority, and authorized access time range. The determination, according to the entrusted-login information, of whether the initiator, that is, the first client, has the authority to initiate the entrusted-login, whether the client, that is, the second client, is a normal registered user of the system, and whether the current entrusted number of people does not reach the maximum authorized number of people limit is made. If the conditions are all met, related information is sent to the entrusted-login management module for carrying out unified management on the entrusted-login information, and an entrusted-login application response message is sent to the initiator, that is, the first client;

The entrusted-login management module may be configured to be responsible for registering and storing entrusted-login detailed information sent by the entrusted-login application access module, providing entrusted-login account inquiry service for the login authentication module and uniformly managing entrusted-login requests and state information of all users.

The login authentication module may be configured to determine whether the account qualifies for logging in to the system, and is responsible for receiving a login (including entrusted-login) authentication request initiated by the client and performing authentication processing on the account. If the login account is matched with the login password, the authentication is successful, and if the login account is not matched with the login password, the authentication fails, and the unified communication suite system is not allowed to be logged in to.

By the application of the entrusted-login method provided by embodiments of the invention in the unified communication suite system, the login security of entrusting others can be improved.

As shown in FIG. 2, embodiments of the present invention provide an entrusted-login method. The method includes the steps described below.

In step S201, entrusted-login application information sent by a first client is received, and a temporary password is generated according to a first account, where the entrusted-login application information includes the first account and a second account.

The temporary password is generated according to the first account, and the generation mode can be random generation or generation of a series of regular passwords, where the temporary password is different from the original password of the first account.

The first client may send the entrusted-login application information through a wireless network or a wired network, and the transmission method is not particularly limited.

In step S202, entrusted-login authorization information is sent to a second client in which the second account is logged in, where the entrusted-login authorization information includes the first account, the second account and the temporary password.

In step S203, a login request sent by the second client is received, where the login request includes the first account and the temporary password.

The login request may be a request to log in to the first account after the second client directly inputs the first account and the temporary password at the entrusted-login interface; or may be a request to log in to the first account after the second client logs in to the second account, jumps to an entrusted-login interface and inputs the first account and the temporary password.

In step S204, the temporary password is authenticated, and if the authentication is successful, send a response message indicating entrusted-login success to the second client.

It is authenticated whether the temporary password input by the second client is the same as the temporary password generated according to the first account, and if the temporary password input by the second client is the same as the temporary password generated according to the first account, the authentication is successful; if the temporary password input by the second client is not the same as the temporary password generated according to the first account, the authentication fails.

In the present embodiment, the server receives entrusted-login application information sent by a first client, where the entrusted-login application information includes the first account and a second account, and generates a temporary password according to the first account; sends entrusted-login authorization information and the temporary password to a second client in which the second account is logged in; receives a login request sent by the second client, where the login request includes the first account and the temporary password; and authenticates the temporary password, and if the authentication is successful, sends a response message indicating entrusted-login success to the second client. Through the steps mentioned above, the second client entrusted to log in logs in to the entrusted first account through the temporary password, so that the password of the first account cannot be leaked, the login to other clients can also be completed, and the login security of other clients is improved.

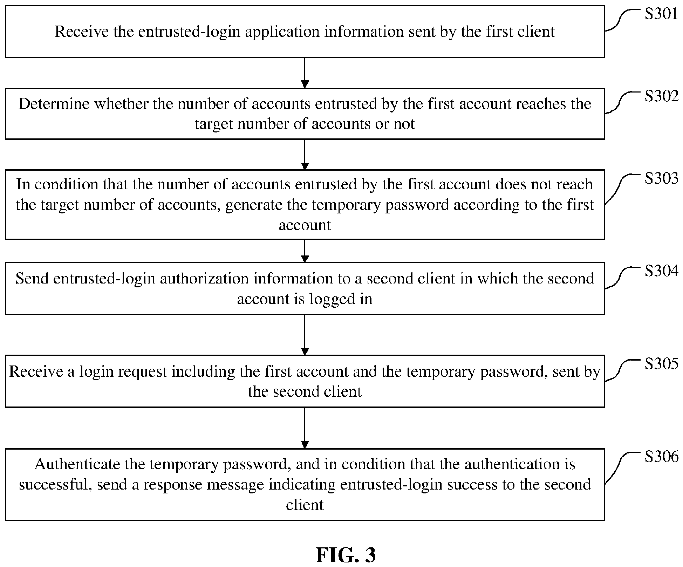

As shown in FIG. 3, embodiments of the present invention provide an entrusted-login method. The method includes the steps described below.

In step S301, the entrusted-login application information sent by the first client is received.

In step S302, whether the number of accounts entrusted by the first account reaches the target number of accounts is determined.

In step S303, if the number of accounts entrusted by the first account does not reach the target number of accounts, the temporary password is generated according to the first account.

It is to be noted that in one embodiment, after the entrusted-login application information sent by the first client is received, the entrusted-login application information may be recorded for accessing when required in a subsequent process. It is determined whether the number of accounts entrusted by the first account reaches the target number of accounts or not, and the first account can entrust a plurality of other clients to log in to the first account to perform related entrusted operation. However, the number of the entrusted accounts cannot exceed the target number of accounts, and the maximum value of the target number of accounts can be 5. Therefore, before the entrustment, it is possible to determine whether or not the number of accounts that have been entrusted exceeds the target number of accounts, and if the number of accounts that has been entrusted exceeds the target number of accounts, the entrustment cannot be made.

In one embodiment, before the temporary password is generated according to the first account, whether the first account and the entrusted second account are accounts of the same system can be determined, because when entrustment is performed between accounts belonging to the same system, stability is higher; and whether the first account has the entrusted authority or not can be determined, and because some operations related to personal benefits require that the first account can entrust other people operations when the first account has the entrusted authority, the rights of the owner of the first account can be well protected. The entrusted-login application information may further include entrusted-access time or entrusted-access rights, entrusted-access time is the specific period when the second client completes the login of the first account, if exceeding the entrusted-access time, then the first account login request will not be authenticated. The entrusted-access authority means that after the second client is successfully entrusted with the login of the first account, the second client can complete the corresponding entrusted task, and the operation which can be performed by the second client is required to be within the entrusted-access authority.

In the present embodiment, the number of accounts entrusted to the first account is determined in advance so as not to reach the target number of accounts, and thus the entrustment is made, thereby preventing the malfunction of the first account due to the excessive number of entrusted accounts.

In step S304, entrusted-login authorization information is sent to a second client in which the second account is logged in, where the entrusted-login authorization information includes the first account, the second account and the temporary password;

In step S305, a login request sent by the second client is received, where the login request includes the first account and the temporary password.

In one embodiment, after Step 305, the method further includes that it is determined whether the first account and the temporary password in the login request exist in the recorded entrusted-login application information and that the state of the first account is updated from a not-login state to an entrusted-login state if the first account and the temporary password in the login request exist in the recorded entrusted-login application information.

In the present embodiment, the server can conveniently determine whether the first account is in the not-login state or the entrusted-login state by monitoring the state of the first account. And then the situation that the first account is still online all the time after the second client finishes the entrusted task but does not log off the first account in time and the entrusted-access time is exceeded can be found in time.

In step S306, the temporary password is authenticated, and if the authentication is successful, a response message indicating entrusted-login success is sent to the second client.

In one embodiment, after step S306, the method further includes the steps described below.

When the entrusted-access time expires, and it is detected that the first account is still in the entrusted-login state, a message indicating that the entrusted-access time expires is sent to the second client.

According to the message indicating that the entrusted-access time expires, the service requested by the second client through the first account is terminated.

The entrusted-login authorization information may further include entrusted-access time. That is, the time for the first client in which the first account is logged in to entrust the second client in which the second account is logged in to perform the entrusted operation. If the entrusted-access time expires, the server may send a message indicating that the entrusted-access time expires to the second client and terminate the service requested by the second client through the first account.

In the present embodiment, through the above steps, the first account can be exited in time when the second client has completed the entrusted task but forgets to log out of the first account of the entrusted account, thereby avoiding that the first account is always in the entrusted-login state.

In one embodiment, after the step 306, the method further includes that an access request sent by the second client is received; it is determined whether the content requested by the access request is within the entrusted authority; and the content requested by the access request is provided if the content is within the entrusted authority.

The entrusted-login authorization information may further include entrusted authority. That is, only when the content requested by the second client through the login to the first account is within the entrusted authority, can the requested content be provided by the server.

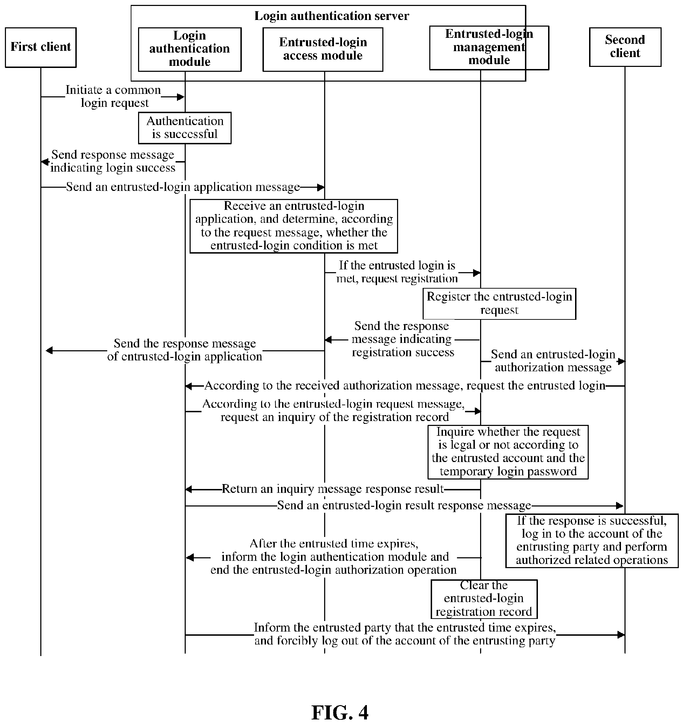

In the present embodiment, only when it is determined that the content requested by the second client through the login to the first account is within the entrusted authority, can the requested content be provided by the server. Through this mechanism, the second client which is entrusted is prevented from operating beyond the entrusted authority and thus prevented from causing losses to the entrusting party. For example, as shown in FIG. 4, an entrusted-login method provided may include the following steps: a first client sends a common login request to a login authentication server, a login authentication module in the login authentication server authenticates a first account of the first client, and the authentication is successful, a response message indicating login success is sent to the first client; the first client sends a request of the entrusted-login application to the login authentication server again after receiving the response message indicating login success, then the entrusted-login access module in the login authentication server determines whether the entrusted-login condition is met or not according to the request of the entrusted-login application, if the entrusted-login condition is met, the entrusted-login access module registers in the entrusted-login management module, sends the response message of the entrusted-login application to the first client, and simultaneously sends a login authorization message to the second client; and then the second client sends an entrusted-login request to the login authentication server according to the login authorization message, the login authentication server inquires whether the entrusted-login account and the temporary login password are registered in the entrusted-login management module, and if the entrusted-login account and the temporary login password are registered in the entrusted-login management module, the second client can successfully log in to the entrusted first account and perform related entrusted operation within the entrusted-access authority. When the entrusted time expires, the login authentication server informs the second client and forces the second client to log out of the first account. Certainly and optionally, at this point, the record of the entrusted-login registration can be cleared or recorded as a log for ease of inquiry in the subsequent operation.

Through the steps, the corresponding entrusted task of the entrusting party can be completed under the condition that the password of the entrusting party is not revealed, and the effect of improving the safety when the account of the entrusting party is in the state of entrusted login by a third party is achieved.

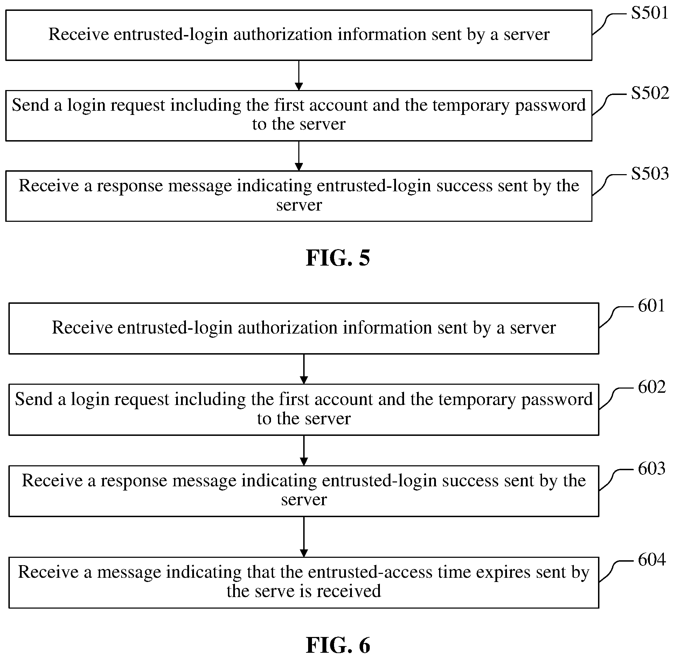

As shown in FIG. 5, embodiments of the present invention provide an entrusted-login method includes the steps described below.

In step S501, entrusted-login authorization information sent by a server is received.

In step S502, a login request is sent to the server, where the login request includes the first account and the temporary password.

In step S503, a response message indicating entrusted-login success sent by the server is received.

The second client may be a terminal, such as a mobile phone, a computer, or a tablet computer, and the specific type of the second client is not limited herein.

According to embodiments of the present invention, through the steps, the second client is entrusted to complete the operation of logging in to the first account, and meanwhile, the entrusted party does not acquire the original password of the first account, so that the leakage of personal sensitive information is avoided, and the safety of the first account when the first account is in the state of entrusted login by a third party is improved.

As shown in FIG. 6, embodiments of the present invention provide an entrusted-login method includes the steps described below.

In step S601, entrusted-login authorization information sent by a server is received.

The entrusted-login authorization information may include a first account, a second account, entrusted-access time, or entrusted-access authority, and it should be noted that the above-mentioned contents are optional, that is, the entrusted-login application information may include part of the first account, the second account, the entrusted-access time, and the entrusted-access authority, or may include all of them, which is not limited herein.

The entrusted-login authorization information may further include a plurality of accounts and entrusted-access authorities corresponding to the plurality of accounts, so that the plurality of accounts can be entrusted to log in to the first account through entrustment in the same time period or different time periods, and corresponding entrusted tasks are completed within the entrusted authority.

In step S602, a login request is sent to the server, where the login request includes the first account and the temporary password.

In step S603, a response message indicating entrusted-login success sent by the server is received.

In one embodiment, after step S603, the method further includes the steps described below.

In step S604, a message indicating that the entrusted-access time expires sent by the server is received.

In the present embodiment, by receiving a message indicating that the entrusted-access time expires, which is sent by the server, the second client, which is the entrusted party, can be made to prepare to log off the first account.

In one embodiment, after step S603, the method further includes the steps described below.

An access request is sent to the server according to the entrusted-access authority.

In the present embodiment, the entrusted second client can perform corresponding operation within the entrusted authority, so that the entrusted task can be completed, the entrusted second client cannot operate the operations which are not entrusted, and the safety of the account of the entrusting party is ensured.

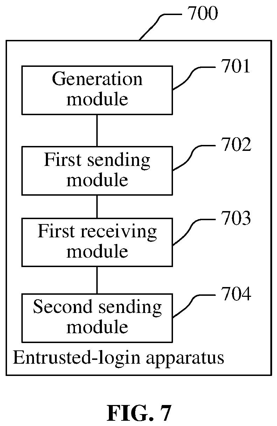

As shown in FIG. 7, embodiments of the present invention provide an entrusted-login apparatus 700. The apparatus 700 includes a generation module 701, a first sending module 702, a first receiving module 703 and a second sending module 704.

The generation module 701 is configured to receive entrusted-login application information sent by a first client, and generate a temporary password according to a first account, where the entrusted-login application information includes the first account and a second account.

The first sending module 702 is configured to send entrusted-login authorization information to a second client in which the second account is logged in, where the entrusted-login authorization information includes the first account, the second account and the temporary password.

The first receiving module 703 is configured to receive a login request including the first account and the temporary password, sent by the second client.

The second sending module 704 is configured to authenticate the temporary password, and if the authentication is successful, send a response message indicating entrusted-login success to the second client.

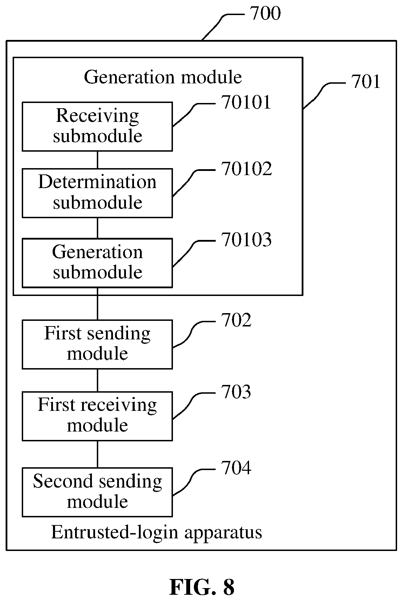

In one embodiment, as shown in FIG. 8, the generation module 701 may include a receiving submodule 70101, determination submodule 70102 and a generation submodule 70103.

The receiving submodule 70101 is configured to receive the entrusted-login application information sent by the first client.

The determination submodule 70102 is configured to determine whether the number of accounts entrusted by the first account reaches the target number of accounts or not.

A generation submodule 70103 is configured to generate the temporary password according to the first account if the number of accounts entrusted by the first account does not reach the target number of accounts.

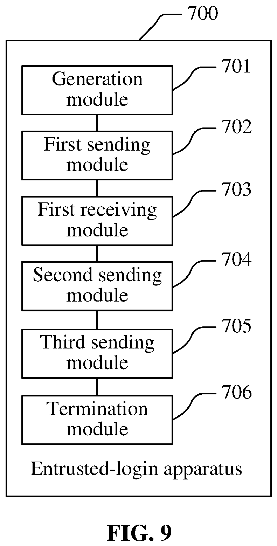

In one embodiment, as shown in FIG. 9, the entrusted-login apparatus 700 may include a third sending module 705 and a termination module 706.

The third sending module 705 is configured to send a message indicating that the entrusted-access time expires to the second client when the entrusted-access time expires and when it is detected that the first account is still in the entrusted-login state.

The termination module 706 is configured to terminate, according to the message indicating that the entrusted-access time expires, the service requested by the second client through the first account.

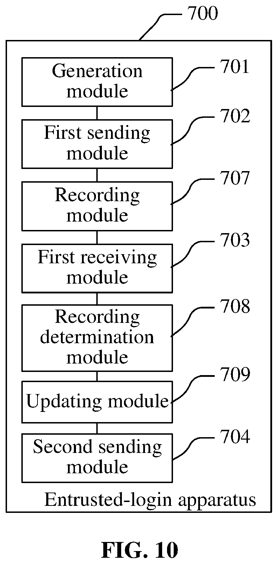

In one embodiment, as shown in FIG. 10, the entrusted-login apparatus 700 may include a recording module 707, a recording determination module 708 and an updating module 709.

The recording module 707 is configured to record the entrusted-login application information.

The recording determination module 708 is configured to determine whether the first account and the temporary password in the login request exist in the recorded entrusted-login application information or not.

The updating module 709 is configured to update the state of the first account from the not-login state to an entrusted-login state if the first account and the temporary password in the login request exist in the recorded entrusted-login application information.

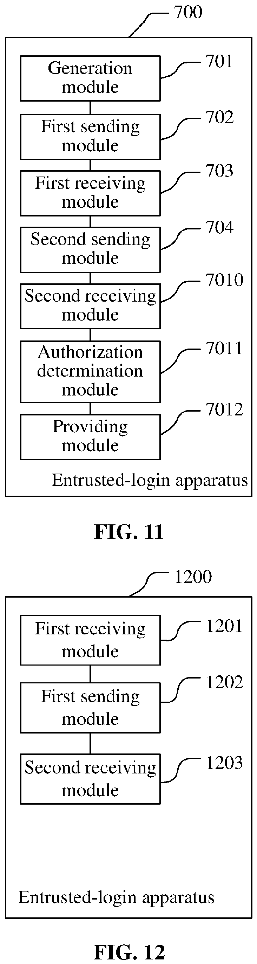

In one embodiment, as shown in FIG. 11, the entrusted-login apparatus 700 may include a second receiving module 7010, an authorization determination module 7011 and a providing module 7012.

The second receiving module 7010 is configured to receive an access request sent by the second client.

The authorization determination module 7011 is configured to determine whether the content requested by the access request is within the entrusted authority.

The providing module 7012 is configured to provide the content requested by the access request if the content is within the entrusted authority.

It is to be noted that, in embodiments of the present invention, the entrusted-login apparatus 700 in the present embodiment can perform the steps in the entrusted-login method embodiments shown in FIGS. 2-3 in the embodiments of the present invention, and achieve the same beneficial effect, which is not described herein again.

As shown in FIG. 12, embodiments of the present invention provide an entrusted-login apparatus 1200. The apparatus includes a first receiving module 1201, a first sending module 1202 and a second receiving module 1203.

The first receiving module 1201 is configured to receive entrusted-login authorization information sent by the server.

The first sending module 1202 is configured to send a login request to the server, where the login request includes the first account and the temporary password.

The second receiving module 1203 is configured to receive a response message indicating entrusted-login success sent by the server.

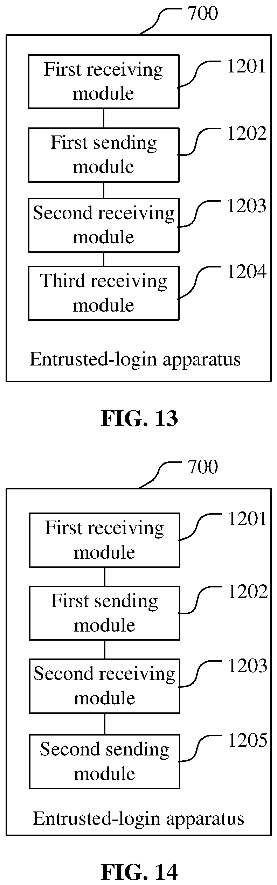

In one embodiment, as shown in FIG. 13, the entrusted-login apparatus 1200 may further include a third receiving module 1204.

The third receiving module 1204 is configured to a message indicating that the entrusted-access time expires sent by the server.

In one embodiment, as shown in FIG. 14, the entrusted-login apparatus 1200 may further include a second sending module 1205.

The second sending module 1205 is configured to send an access request to the server according to the entrusted-access authority.

It is to be noted that, in embodiments of the present invention, the entrusted-login apparatus 1200 in the present embodiment can perform the steps in the entrusted-login method embodiments shown in FIGS. 5-6 in the embodiments of the present invention, and achieve the same beneficial effect, which is not described herein again.

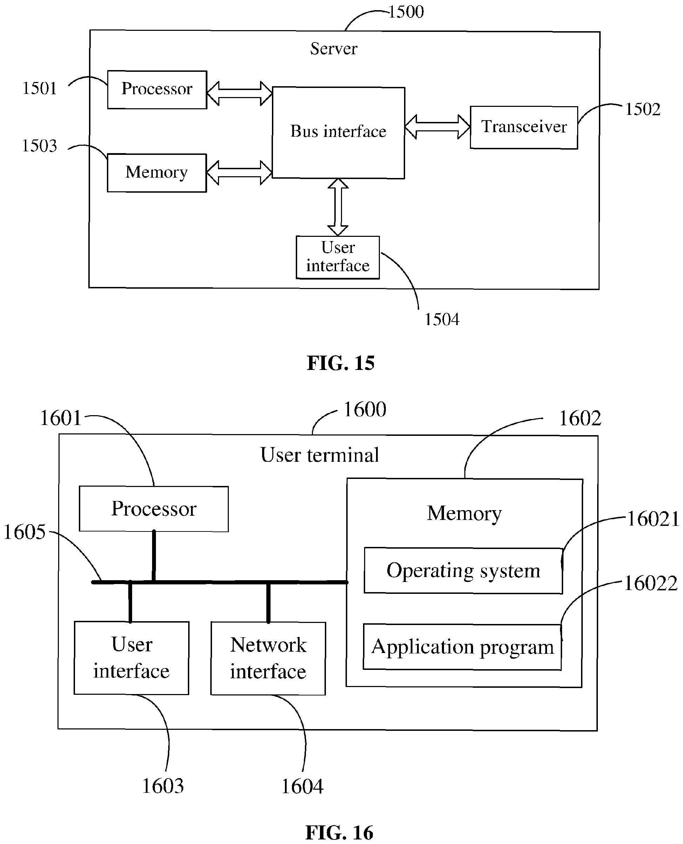

As shown in FIG. 15, FIG. 15 is a structural diagram of a server according to embodiments of the present invention, and FIG. 15 can perform details of the entrusted-login method of the embodiments shown in FIGS. 2-3, and achieve the same effect. As shown in FIG. 15, the server 1500 includes a processor 1501, a transceiver 1502, a memory 1503, a user interface 1504, and a bus interface.

The processor 1501 is configured to read the program in the memory 1503 and execute the processes described below.

Entrusted-login application information sent by a first client is received, and a temporary password is generated according to a first account, where the entrusted-login application information includes the first account and a second account.

The entrusted-login authorization information is sent to a second client in which the second account is logged in, where the entrusted-login authorization information includes the first account, the second account and the temporary password.

A login request sent by the second client is received, where the login request includes the first account and the temporary password.

The temporary password is authenticated, and if the authentication is successful, a response message indicating entrusted-login success is sent to the second client.

The transceiver 1502 is configured to receive and send data under control of the processor 1501, and includes at least two antenna ports.

In FIG. 15, the bus architecture may include any number of interconnected buses and bridges, various circuits, particularly one or more processors represented by processor 1501 and memory represented by memory 1503, which are all linked together. The bus architecture may also link together various other circuits such as peripherals, voltage regulators, power management circuits, and the like, which are well known in the art and, therefore, will not be described further herein. The bus interface provides an interface. The transceiver 1502 may be a plurality of elements including a sender and a receiver providing a unit configured to communicate with various other devices over a transmission medium. The user interface 1504 may also be an interface capable of interfacing with a desired device for different user devices, including but not limited to a keypad, display, speaker, microphone, joystick, and the like.

The processor 1501 is configured to be in charge of managing the bus architecture and general processing, and the memory 1503 may be configured to store data used by the processor 1501 when performing operations.

In one embodiment, the steps in which the entrusted-login application information sent by the first client is received and the temporary password is generated according to the first account include that the entrusted-login application information sent by the first client is received; it is determined whether the number of accounts entrusted by the first account reaches the target number of accounts; and the temporary password is generated according to the first account if the number of accounts entrusted by the first account does not reach the target number of accounts.

In one embodiment, the entrusted-login authorization information further includes entrusted-access time.

After the response message indicating login success is sent to the second client, the method further includes the steps described below.

When the entrusted-access time expires, and it is detected that the first account is still in the entrusted-login state, a message indicating that the entrusted-access time expires is sent to the second client.

According to the message indicating that the entrusted-access time expires, the service requested by the second client through the first account is terminated.

In one embodiment, after the entrusted-login application information sent by the first client is received, the method further includes that the entrusted-login application information is recorded. After the login request sent by the second client is received, where the login request includes the first account and the temporary password, the method further includes that it is determined whether the first account and the temporary password in the login request exist in the recorded entrusted-login application information; and the state of the first account is updated from a not-login state to an entrusted-login state if the first account and the temporary password in the login request exist in the recorded entrusted-login application information.

In one embodiment, the entrusted-login authorization information further includes entrusted-access authority.

After the response message indicating login success is sent to the second client, the method further includes the steps described below.

An access request sent by the second client is received.

It is determined whether the content requested by the access request is within the entrusted authority.

If the content requested by the access request is within the entrusted authority, the content requested by the access request is provided.

It is to be noted that, in embodiments of the present invention, the above-mentioned server 1500 in the present embodiment can perform the steps in the VNF reinforcement method embodiments shown in FIGS. 2-3 in embodiments of the present invention, and achieve the same beneficial effect, which is not described herein again.

Referring to FIG. 16, FIG. 16 is a structural diagram of a user terminal applied to embodiments of the present invention, which can implement details of the entrusted-login method shown in FIGS. 5-6 and achieve the same effect. As shown in FIG. 16, the user terminal 1600 includes: at least one processor 1601, a memory 1602, at least one network interface 1604, and a user interface 1603. Various components in the terminal 1600 are coupled together by the bus system 1605. It may be understood that the bus system 1605 is configured to implement connections and communications among these components. In addition to a data bus, the bus system 1605 further includes a power bus, a control bus and a state signal bus. However, for the sake of clarity, various buses are all marked as the bus system 1605 in FIG. 16.

The user interface 1603 may include a display, a keyboard, or a click device (e.g., a mouse, a track ball, a touch pad, or a touch screen, etc.).

It can be understood that the first memory 2102 in embodiments of the present invention may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access Memory (RAM), which serves as an external cache. By way of an illustrative description rather than a restrictive description, many forms of RAMs may be used, such as a static RAM (SRAM), a dynamic RAM (DRAM), a synchronous DRAM (SDRAM), a double data rate SDRAM (DDRSDRAM), an enhanced SDRAM (ESDRAM), a synclink DRAM (SLDRAM), and a direct rambus RAM (DRRAM). The first memory 1602 of the system and the method described herein is intended to include, but is not limited to, these and any other suitable types of memory.

In some embodiments, the memory 1602 stores elements, executable modules or data structures, or subsets thereof, or extended sets thereof: an operating system 16021 and application programs 16022.

The operating system 16021 includes various system programs, such as a framework layer, a core library layer, a drive layer and the like, and is configured to implement various basic services and processing hardware-based tasks. The application 16022 may include various applications, such as a media player, a browser, etc., and is configured to implement various application services. Programs for performing the methods in embodiments of the present invention may be included in the application program 16022.

In embodiments of the present invention, a program or an instruction stored in the memory 1602 is accessed, in one embodiment, the program or the instruction may be stored in the application 16022, and the processor 1601 is configured to receive entrusted-login authorization information sent by a server; send a login request to the server, where the login request includes the first account and the temporary password; and receive a response message indicating entrusted-login success sent by the server.

The methods disclosed by embodiments of the present invention may be applied to the processor 1601 or may be implemented by the processor 1601. The processor 1601 may be an integrated circuit chip with a signal processing capability. In the implementation process, various steps of the methods described above may be performed by an integrated logic circuit of hardware or a software instruction in the processor 1601. The first processor 1601 described above may be a general-purpose processor, a digital signal processor (DSP), an application specific integrated circuit (ASIC), a field-programmable gate array (FPGA) or other programmable logic devices, discrete gates or transistor logic, or discrete hardware components. The second processor may implement or execute various methods, steps and logic block diagrams disclosed in embodiments of the present invention. The general-purpose processor may be a microprocessor or any conventional processor. The steps of the methods disclosed in the embodiments of the present invention may be directly implemented by a hardware decoding processor, or may be implemented by a combination of hardware and software modules in the decoding processor. The software modules may be located at a RAM, a flash memory, a ROM, a PROM, an electrically erasable programmable memory, a register, or other established storage medium in the art. The storage medium is located in the first memory 1602. The first processor 1601 reads information in the first memory 1602 and implements the steps of the methods described above in combination with hardware of the processor.

It can be understood that these embodiments described herein may be implemented by hardware, software, firmware, middleware, microcode or a combination thereof. For a hardware implementation, the processing unit may be implemented within one or more application specific integrated circuits (ASICs), digital signal processors (DSPs), DSP devices (DSPDs), programmable logic devices (PLDs), field-programmable gate arrays (FPGAs), general-purpose processors, controllers, microcontrollers, microprocessors, other electronic units used for performing the functions described in the present application, or a combination thereof.

For a software implementation, the techniques described herein can be implemented with modules (e.g., processes, functions, and so on) that perform the functions described herein. The software codes can be stored in memories and executed by processors. The memory may be implemented within or external to the processor.

In one embodiment, the entrusted-login authorization information further includes entrusted-access time.

After the response message indicating login success sent by the server is received, the method further includes the steps described below.

A message indicating that the entrusted-access time expires sent by the server is received.

In one embodiment, the entrusted-login authorization information further includes entrusted-access authority.

After the response message indicating login success sent by the server is received, the method further includes the steps described below.

An access request to the server according to the entrusted-access authority is sent.

It is to be noted that, in the present embodiment, the user terminal 1600 may be a user terminal of any implementation in embodiments of the entrusted-login method applied to the user terminal in embodiments of the present invention, and any implementation of the user terminal applied in embodiments of the entrusted-login method applied to the user terminal in embodiments of the present invention may be implemented by the user terminal 1600 in the present embodiment and can achieve the same beneficial effects, and thus will not be described herein again.

The present embodiment further provides a computer-readable medium, and those skilled in the art will understand that all or part of the steps of performing the methods of embodiments shown in FIGS. 2-3 can be implemented by hardware related to program instructions, and the program can be stored in a computer-readable medium, and when executed, the program includes the steps described below.

Entrusted-login application information sent by a first client is received, and a temporary password is generated according to a first account, where the entrusted-login application information includes the first account and a second account.

Entrusted-login authorization information is sent to a second client in which the second account is logged in, where the entrusted-login authorization information includes the first account, the second account and the temporary password.

A login request is sent by the second client, where the login request includes the first account and the temporary password.

The temporary password is authenticated, and if the authentication is successful, a response message indicating entrusted-login success is sent to the second client.

In one embodiment, when the program is executed, the steps in which the entrusted-login application information sent by the first client is received and the temporary password is generated according to the first account include that the entrusted-login application information sent by the first client is received; it is determined whether the number of accounts entrusted by the first account reaches the target number of accounts or not; and if the number of accounts entrusted by the first account does not reach the target number of accounts, the temporary password is generated according to the first account.

In one embodiment, when the program is executed, the entrusted-login authorization information further includes entrusted-access time.

After the response message indicating login success is sent to the second client, the method further includes the steps described below.

When the entrusted-access time expires, and when it is detected that the first account is still in the entrusted-login state, a message indicating that the entrusted-access time expires is sent to the second client.

According to the message indicating that the entrusted-access time expires, the service requested by the second client through the first account is terminated.

In one embodiment, when the program is executed, after the entrusted-login application information sent by the first client is received, the method further includes the steps described below.

The entrusted-login application information is recorded.

After a login request sent by the second client is received, where the login request includes the first account and the temporary password, the method further includes the steps described below.

It is determined whether the first account and the temporary password in the login request exist in the recorded entrusted-login application information or not.

If the first account and the temporary password in the login request exist in the recorded entrusted-login application information, the state of the first account is updated from a not-login state to an entrusted-login state.

In one embodiment, the program, when executed, further includes the steps described below.

The entrusted-login authorization information further includes entrusted-access authority.

After the response message indicating login success is sent to the second client, the method further includes the steps described below.

An access request sent by the second client is received.

It is determined whether the content requested by the access request is within the entrusted authority.

If the content is within the entrusted authority, the content requested by the access request is provided.

The storage medium may be a read-only memory (ROM), a random access memory (RAM), a magnetic disk, or an optical disk, and the like.

The present embodiment further provides a computer-readable storage medium, and those skilled in the art will understand that all or part of the steps of performing the methods of embodiments shown in FIGS. 5-6 can be implemented by hardware related to program instructions, and the program can be stored in a computer-readable medium, and when executed, the program includes the steps described below.

Entrusted-login authorization information sent by a server is received.

A login request is sent to the server, where the login request includes the first account and the temporary password.

A response message indicating entrusted-login success sent by the server is received.

In one embodiment, the program, when executed, further includes the steps described below.

The entrusted-login authorization information further includes entrusted-access time.

After the response message indicating login success sent by the server is received, the method further includes the steps described below.

A message indicating that the entrusted-access time expires sent by the server is received.

In one embodiment, when the program is executed, the entrusted-login application information further includes entrusted-access authority.

After the response message indicating login success sent by the server is received, the method further includes the steps described below.

An access request is sent to the server according to the entrusted-access authority.

The above are merely optional implementation modes of the present invention. It is to be noted that for those skilled in the art, a number of improvements and modifications may be made without departing from the principle of the present invention, and these improvements and modifications are within the scope of the present invention.

## Claims

1. An entrusted-login method, comprising:
receiving entrusted-login application information sent by a first client, and generating a temporary password according to a first account, wherein the entrusted-login application information comprises the first account and a second account;
sending entrusted-login authorization information to a second client in which the second account is logged in, wherein the entrusted-login authorization information comprises the first account, the second account and the temporary password;
receiving a login request sent by the second client, wherein the login request comprises the first account and the temporary password; and
authenticating the temporary password, and in condition that the authentication is successful, sending a response message indicating entrusted-login success to the second client.

2. The method of claim 1, wherein the receiving the entrusted-login application information sent by the first client, and generating the temporary password according to the first account comprises:
receiving the entrusted-login application information sent by the first client;
determining whether a number of accounts entrusted by the first account reaches a target number of accounts; and
in condition that the number of accounts entrusted by the first account does not reach the target number of accounts, generating the temporary password according to the first account.

3. The method of claim 2, wherein the entrusted-login authorization information further comprises entrusted-access time;
after the sending the response message indicating entrusted-login success to the second client, the method further comprises:
in condition that the entrusted-access time is expired and the first account is detected to be still in an entrusted-login state, sending a message indicating that the entrusted-access time expires to the second client; and
terminating, according to the message indicating that the entrusted-access time expires, a service requested by the second client through the first account.

4. The method of claim 2 or 3, wherein after the receiving the entrusted-login application information sent by the first client, the method further comprises:
recording the entrusted-login application information;
after the receiving the login request sent by the second client, wherein the login request comprises the first account and the temporary password, the method further comprises:
determining whether the first account and the temporary password in the login request exist in the recorded entrusted-login application information; and
in condition that the first account and the temporary password in the login request exist in the recorded entrusted-login application information, updating a state of the first account from a not-login state to an entrusted-login state.

5. The method of claim 2 or 3, wherein the entrusted-login authorization information further comprises entrusted-access authority;
after the sending the response message indicating the entrusted-login success to the second client, the method further comprises:
receiving an access request sent by the second client;
determining whether a content requested by the access request is within the entrusted authority; and
in condition that the content is within the entrusted authority, providing the content requested by the access request.

6. An entrusted-login method, comprising:
receiving entrusted-login authorization information sent by a server, wherein the entrusted-login authorization information comprises a first account and a temporary password;
sending a login request comprising the first account and the temporary password to the server; and
receiving a response message indicating entrusted-login success sent by the server.

7. The method of claim 6, wherein the entrusted-login authorization information further comprises entrusted-access time;
after the receiving the response message indicating the entrusted-login success sent by the server, the method further comprises:
receiving a message indicating that the entrusted-access time expires sent by the server.

8. The method of claim 6 or 7, wherein the entrusted-login authorization information further comprises entrusted-access authority;
after the receiving the response message indicating the entrusted-login success sent by the server, the method further comprises:
sending an access request to the server according to the entrusted-access authority.

9. An entrusted-login apparatus, comprising:
a generation module, which is configured to receive entrusted-login application information sent by a first client and generate a temporary password according to a first account, wherein the entrusted-login application information comprises the first account and a second account;
a first sending module, which is configured to send entrusted-login authorization information to a second client in which the second account is logged in, wherein the entrusted-login authorization information comprises the first account, the second account and the temporary password;
a first receiving module, which is configured to receive a login request sent by the second client, wherein the login request comprises the first account and the temporary password; and
a second sending module, which is configured to authenticate the temporary password, and in condition that the authentication is successful, send a response message indicating entrusted-login success to the second client.

10. The apparatus of claim 9, wherein the generation module comprises:
a receiving submodule, which is configured to receive the entrusted-login application information sent by the first client;
a determination submodule, which is configured to determine whether a number of accounts entrusted by the first account reaches a target number of accounts; and
a generation submodule, which is configured to generate the temporary password according to the first account in condition that the number of accounts entrusted by the first account does not reach the target number of accounts.

11. The apparatus of claim 10, wherein the entrusted-login authorization information further comprises entrusted-access time;
the entrusted-login apparatus further comprises:
a third sending module, which is configured to send a message indicating that entrusted-access time expires to the second client in condition that the entrusted-access time is expired and the first account is detected to be still in an entrusted-login state; and
a termination module, which is configured to terminate, according to the message indicating that the entrusted-access time expires, a service requested by the second client through the first account.

12. The apparatus of claim 10 or 11, further comprising:
a recording module, which is configured to record the entrusted-login application information;
a recording determination module, which is configured to determine whether the first account and the temporary password in the login request exist in the recorded entrusted-login application information; and
an updating module, which is configured to update a state of the first account from a not-login state to an entrusted-login state in condition that the first account and the temporary password in the login request exist in the recorded entrusted-login application information.

13. The apparatus of claim 10 or 11, wherein the entrusted-login authorization information further comprises entrusted-access authority;
the entrusted-login apparatus further comprises:
a second receiving module, which is configured to receive an access request sent by the second client;
an authorization determination module, which is configured to determine whether a content requested by the access request is within the entrusted authority; and
a providing module, which is configured to provide the content requested by the access request in condition that the content is within the entrusted authority.

14. An entrusted-login apparatus, comprising:
a first receiving module, which is configured to receive entrusted-login authorization information sent by a server, wherein the entrusted-login authorization information comprises a first account and a temporary password;
a first sending module, which is configured to send a login request to the server, wherein the login request comprises the first account and the temporary password; and
a second receiving module, which is configured to receive a response message indicating entrusted-login success sent by the server.

15. The apparatus of claim 14, wherein the entrusted-login authorization information further comprises entrusted-access time;
the entrusted-login apparatus further comprises:
a third receiving module, which is configured to receive a message indicating that the entrusted-access time expires sent by the server.

16. The apparatus of claim 14 or 15, wherein the entrusted-login authorization information further comprises entrusted-access authority;
the entrusted-login apparatus further comprises:
a second sending module, which is configured to send an access request to the server according to the entrusted-access authority.

17. A server, which comprises a memory, a processor, and a computer program stored in the memory and executable on the processor, wherein, when executing the computer program, the processor performs the entrusted-login method of any one of claims 1 to 5.

18. A user terminal, which comprises a memory, a processor, and a computer program stored in the memory and executable on the processor, wherein when executing the computer program, the processor performs the steps in the entrusted-login method of any one of claims 6 to 8.

19. A computer-readable storage medium, which is configured to store a computer program, which when executed by a processor, causes the processor to perform the steps in the entrusted-login method of any one of claims 1 to 5.

20. A computer-readable storage medium, which is configured to store a computer program, which when executed by a processor, causes the processor to perform the entrusted-login method of any one of claims 6 to 8.
